# EUROPEAN PATENT SPECIFICATION

(11) **EP 3 654 468 B1**
(45) Date of publication and mention of the grant of the patent: **24.06.2026**
(21) Application number: 17917385.1
(22) Date of filing: 11.07.2017
(51) Int. Cl.: H02B 11/133

(54) **CHASSIS VEHICLE LOCKING APPARATUS**
FAHRGESTELLFAHRZEUGVERRIEGELUNGSVORRICHTUNG
APPAREIL DE VERROUILLAGE DE VÉHICULE SUR CHÂSSIS

(43) Date of publication of application: 20.05.2020
(73) Proprietor: ABB Schweiz AG, 5400 Baden (CH)
(72) Inventor: WANG, Qiliang, Xiamen Fujian 361116 (CN); LV, Yurong, Xiamen Fujian 361008 (CN); ZHUANG, Zhijian, Xiamen Fujian 361021 (CN); LI, Qiaoling, Xiamen Fujian 361006 (CN)
(74) Representative: Zimmermann & Partner Patentanwälte mbB
(86) International application number: PCT/CN2017/092461
(87) International publication number: WO 2019/010625

(56) References cited:
- CN-A- 103 762 512
- CN-A- 103 762 512
- CN-U- 201 584 350
- CN-U- 202 997 387
- CN-U- 204 243 585
- CN-U- 204 991 537
- CN-U- 205 039 440
- CN-U- 205 723 388
- CN-Y- 201 398 025
- JP-A- 2002 343 218
- ABB: "Medium voltage products VM1/A/P withdrawable circuit breaker", 14 May 2013 (2013-05-14), ABB Library, XP055760365, Retrieved from the Internet <URL:https://search.abb.com/library/Download.aspx?DocumentID=1VCD601003%202012.07&LanguageCode=en&DocumentPartId=&Action=Launch> [retrieved on 20201216]

## Description

### FIELD

The present disclosure relates to the technical field of electrical power products, and specifically to the technical field of high-voltage switching devices, and particularly to a chassis cart apparatus for a high-voltage switch circuit breaker.

### BACKGROUND

Switching devices are used as protection devices in power systems, and its safety during operation is particularly important. It is required that the chassis cart cannot be rocked in and out in a closing state of the switching device. This may prevent the operator from operating the switching device in the event of by mistake so that the protective function may still be achieved. Document CN 201 398 025 Y describes an interlocking device of middle and high-pressure switch contactor and chassis truck. The ABB document with the title "Medium voltage products VM1/A/P withdrawable circuit breaker" of May 14, 2013 with the number XP055760365 describes montage and maintenance instructions for a medium voltage circuit breaker. Document CN 204 243 585 U refers to a high-voltage vacuum contactor handcart interlocking mechanism and document CN 103 762 512 A describes an operating mechanism chassis truck interlocking device and interlocking method thereof.

However, the existing known technology of locking the chassis cart directly adopts an interlocking mechanism triggered by an actuator of the switching device to implement stop of and yield to a flipper plate of the chassis cart. When the switching device is closed, the actuator drives three-phase contacts to perform a closing action, and meanwhile drives the interlocking mechanism of the chassis cart to move to a specified position, thereby stopping the flipper plate of the chassis cart. When the switching device is opened, the actuator drives the three-phase contacts to perform an opening operation, and meanwhile drives the interlocking mechanism to move in an opposite direction to yield to the flipper plate of the chassis cart.

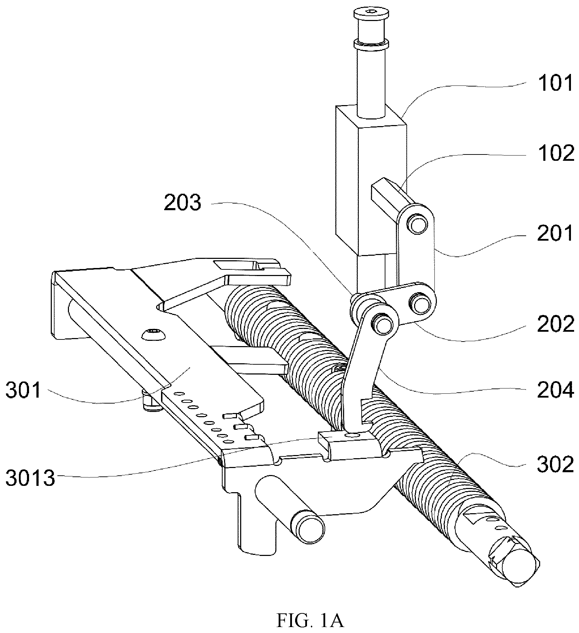

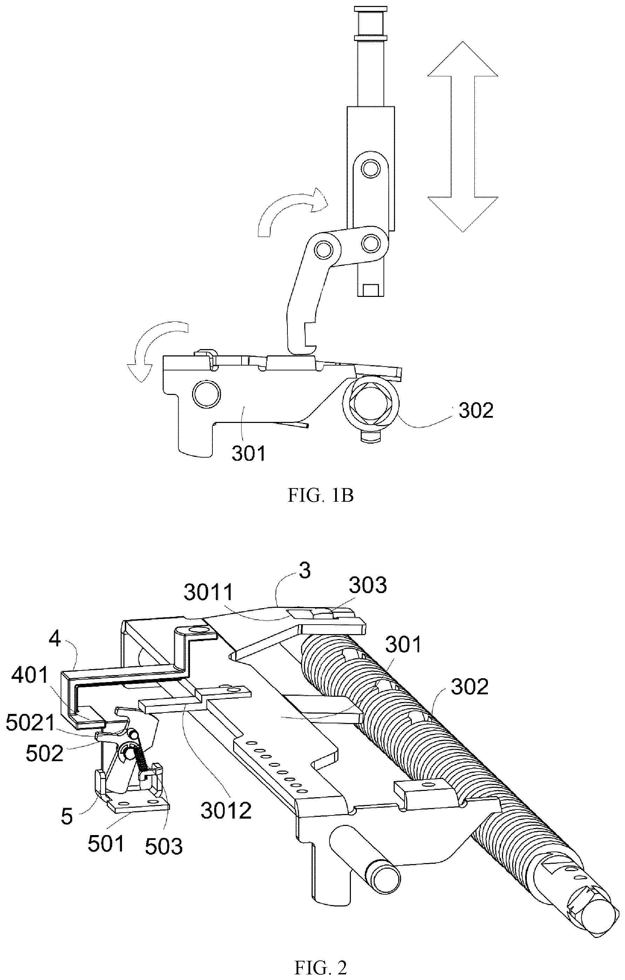

FIGS. 1A and 1B show a conventional locking apparatus for a chassis cart, wherein FIG. 1A is a perspective view and FIG. 1B is a front view. The figures show a closing state of the locking apparatus of the chassis cart, which includes a vertically-movable pivot 101, a link 102, a first locking link 201, a second locking link 202, a locking and fixing pin 203, a locking stopper 204, and a flipper plate 301 and a screw 302 on the chassis cart.

The movable pivot 101 implements the opening and closing operation of the switch, and thereby brings the first locking link 201 to move vertically via the link 102; the second locking link 202 is fixedly connected together with the locking stopper 204, and may rotate about the locking and fixing pin 203, and the locking and fixing pin 203 is not affected by other movement members. Meanwhile, the second locking link 202 is connected with the first locking link 201. As such, driven by the first locking link 201, the locking stopper 204 may rotate. When the switching device is in the closing position, the locking stopper 204 rotates to above a tongue 3013 of the flipper plate 301 with a small gap therebetween.

However, this kind of interlocking mechanism has the following drawbacks: when the switching device is closed, if the chassis cart is driven, due to the stopping function of the interlocking mechanism the restoring force of the flipper plate on the chassis cart directly acts on the interlocking mechanism, and thereby acts on the actuator of the switching device, which imposes a risk of the opening of the actuator. In addition, the conventional chassis cart closing and locking apparatus is complicated in both structure and assembling.

### SUMMARY

To address the drawbacks and problems existing in the chassis cart locking apparatus in the prior art, the present disclosure provides a locking apparatus for a chassis cart and a switching device, as defined in claim 1.

According to a preferred embodiment of the present disclosure, the driving plate moves up and down along with a closing or opening operation of the switching device actuator, thereby driving the latching plate to rotate clockwise or counterclockwise.

According to a preferred embodiment of the present disclosure, the latching plate has a dead point position between the first limiting plate and the second limiting plate, and the tension spring achieves a maximum tensile energy storage when it is at the dead point position.

According to a preferred embodiment of the present disclosure, the latching plate comprises a U-shaped groove, which is adapted to receive a driving plate protrusion and is driven by the driving plate, and the latching plate rotates clockwise or counterclockwise about the rotation shaft between the first limiting plate and second limiting plate.

According to a preferred embodiment of the present disclosure, the U-shaped groove comprises a first protrusion and a second protrusion; the first protrusion is adapted in a way that the latching plate, when limited by the first limiting plate, is driven by the driving plate about the rotation shaft until the latching plate reaches the limiting position of the second limiting plate; the second protrusion is adapted in a way that the latching plate, when limited by the second limiting plate, is driven by the driving plate about the rotation shaft until the latching plate reaches the limiting position of the first limiting plate.

According to a preferred embodiment of the present disclosure, the driving plate comprises a driving plate protrusion which is adapted to mate with the U-shaped groove of the latching plate; when the latching plate reaches the position of the first limiting plate or the position of the second limiting plate, the driving plate protrusion is released from the U-shaped groove if the driving plate continues to move in the same direction, and drives the latching plate if it moves in a reverse direction.

According to a preferred embodiment of the present disclosure, the latching plate comprises a raised pin, and the support plate comprises a spring hook; one end of the tension spring is fixed on the raised pin, and the other end thereof is fixed on the spring hook.

According to a preferred embodiment of the present disclosure, when the latching plate rotates to a position at which the raised pin, the spring hook and the rotation shaft form a straight line, the latching plate reaches the dead point position.

According to a preferred embodiment of the present disclosure, the protruding piece and the flipper plate are an integrated structure or a separable structure connected fixedly.

The locking apparatus for the chassis cart according to the present disclosure is safer, and particularly the force for driving the chassis cart in or out will not be applied to the actuator of the switching device; furthermore, the locking apparatus for the chassis cart is simply structured and modularized, and saves the assembling time.

### BRIEF DESCRIPTION OF THE DRAWINGS

FIGS. 1A-1B illustrate schematic structural diagrams of a conventional chassis cart closing and locking apparatus; wherein FIG. 1A is a perspective view, and FIG. 1B is a front view;
FIG. 2 illustrates a schematic structural diagram of a closing and locking apparatus for a chassis cart according to a preferred embodiment of the present disclosure;
FIG. 3 illustrates a schematic structural diagram of a locking unit of a closing and locking apparatus for a chassis cart according to a preferred embodiment of the present disclosure;
FIG. 4 illustrates a schematic diagram of the chassis cart closing and locking apparatus locking the chassis cart according to a preferred embodiment of the present disclosure;
FIGS. 5A-5B illustrate schematic diagrams of the chassis cart closing and locking apparatus releasing the chassis cart according to a preferred embodiment of the present disclosure, wherein FIG. 5A is a front view and FIG. 5B is a perspective view.

### DETAILED DESCRIPTION

Detailed depictions of optional embodiments of the present disclosure are presented below with reference to the figures.

FIG. 2 is a schematic configuration diagram showing a chassis cart locking apparatus with a dead point position according to the present disclosure, and the figure shows a state in which an actuator of a switching device is closed. The chassis cart locking apparatus of the present disclosure comprises a locking unit 5. The locking unit 5 comprises a support plate 501, a latching plate 502 and an extension spring 503. One end of the extension spring 503 is secured on the latching plate 502, and the other end thereof is secured on the support plate 501. The support plate 501 comprises a first limiting plate 5011 and a second limiting plate 5012. The latching plate 502 is rotatably secured onto a rotation shaft 5015 and, under the action of a driving plate 4, rotates clockwise or anticlockwise around the rotation shaft 5015. When the latching plate 502 rotates to be limited by the first limiting plate 5011, the driving plate 4 is separated from the locking unit 5; and when the latching plate 502 rotates to be limited by the second limiting plate 5012, the driving plate 4 comes into contact with the locking unit 5. The resetting of the driving plate 4 drives the locking unit 5 to rotate about the rotation shaft 5015 away from the second limiting plate 5012 toward the first limiting plate 5011.

A flipper plate 301 has a yielding hole 3011 that can mate with a stop pin 303 to implement the locking or yielding function; typically, a feature protruding piece 3012 on the flipper plate 301 is used for engaging with the latching plate 502 of the locking unit 5 to implement the latching or yielding function. The protruding piece 3012 may be integrally formed with the flipper plate 301 or may be fixedly connected with the flipper plate 301 to form one piece.

A height and width of the latching plate 502 are adapted in a way that when the latching plate 502 is rotated to be limited by the first limiting plate 5011, the latching plate 502 is located under the protruding piece 3012 and blocks downward movement of the protruding piece 3012; when the latching plate 502 is rotated to be limited by the second limiting plate 5012, the latching plate 502 gets out of a limiting range of the vertical movement of the protruding piece 3012.

The driving plate 4 is coupled to the actuator of the switching device, and moves up or down with the closing or opening operation of the actuator of the switching device, thereby driving the latching plate 502 to rotate clockwise or counterclockwise.

According to a preferred embodiment of the present disclosure, the latching plate 502 has a dead point position between the first limiting plate 5011 and the second limiting plate 5012, and the tension spring 503 achieves a maximum tensile energy storage when at the dead point position.

The latching plate 502 comprises a raised pin 5022, and the support plate 501 comprises a spring hook 5013. One end of the tension spring 503 is fixed on the raised pin 5022, and the other end thereof is fixed on the spring hook 5013.

When the latching plate 502 rotates to a position at which the raised pin 5022, the spring hook 5013 and the rotation shaft 5015 form a straight line, the latching plate 502 reaches the dead point position.

As shown in FIG. 2, the chassis cart locking apparatus of the present disclosure further comprises a flipper plate and screw mechanism 3, which comprises a flipper plate 301, a screw 302 and a stop pin 303. The flipper plate 301 comprises a yielding hole 3011, which may mate with stop pin 303 to lock or yield.

According to a preferred embodiment of the present disclosure, the protruding piece 3012 and the flipper plate 301 are an integrated or a separable structure connected fixedly.

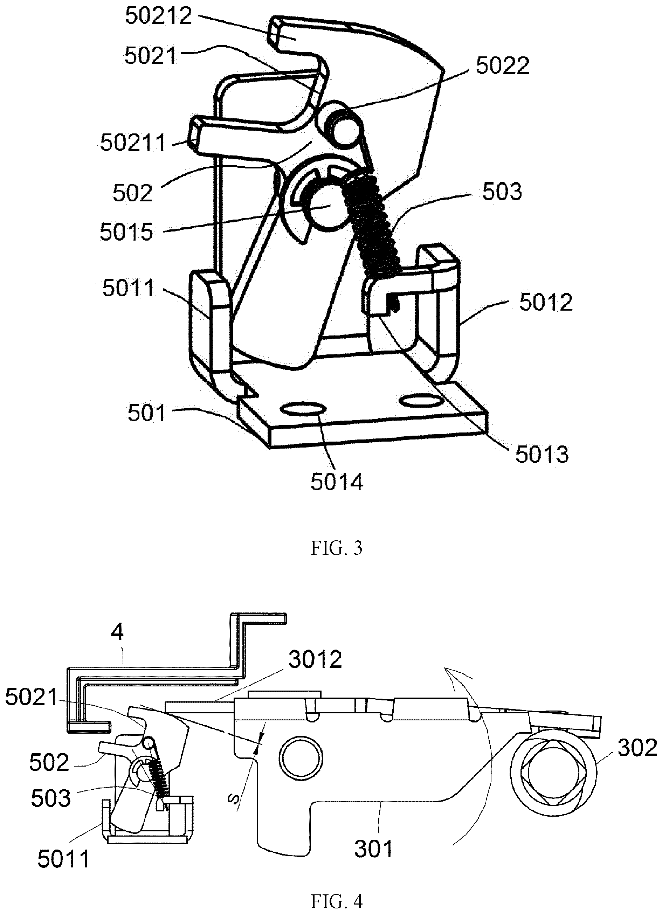

FIG. 3 is a schematic structural diagram of a locking unit of a chassis cart locking apparatus according to a preferred embodiment of the present disclosure. As illustrated, a support plate 501 has a first limiting plate 5011 and a second limiting plate 5012 for limiting the clockwise and counterclockwise rotation angle of the latching plate 502 respectively; a spring hook 5013 is used to fix one end of the tension spring 503; at least one fixing hole 5014 is used for fixedly connecting the support plate 501 to a bottom plate of the chassis cart; the raised pin 5022 on the latching plate 502 is used to fix the other end of the tension spring 503; the latching plate 502 is rotated about a rotation shaft 5015 on the support plate 501.

The latching plate 502 comprises a U-shaped groove 5021, which is adapted to receive a driving plate protrusion 401 and is driven by the driving plate 4. The latching plate 502 rotates clockwise or counterclockwise about the rotation shaft 5015 between the first limiting plate 5011 and second limiting plate 5012.

The U-shaped groove 5021 comprises a first protrusion 50211 and a second protrusion 50212; the first protrusion 50211 is adapted in a way that the latching plate 502, when limited by the first limiting plate 5011, is driven by the driving plate 4 about the rotation shaft 5015 until the latching plate 502 reaches the limiting position of the second limiting plate 5012; the second protrusion 50212 is adapted in a way that the latching plate 502, when limited by the second limiting plate 5012, is driven by the driving plate 4 about the rotation shaft 5015 until the latching plate 502 reaches the limiting position of the first limiting plate 5011.

The driving plate 4 comprises the driving plate protrusion 401 which is adapted to mate with the U-shaped groove 5021 of the latching plate 502 to be snapped into the U-shaped groove 5021. When the actuator of the switching device performs the closing or opening operation, the driving plate 4 moves up and down with the actuator of the switching device, to drive the latching plate 502 to implement clockwise or counterclockwise rotation When the latching plate 502 reaches the limiting position of the first limiting plate 5011 or the limiting position of the second limiting plate 5012, the driving plate protrusion 401 is released from the U-shaped groove 5021 if the driving plate 4 continues to move in the same direction, and drives the latching plate 502 if the driving plate 4 moves in the reverse direction.

**Hereinafter, description will be made to the working principle of the chassis cart locking apparatus according to the present disclosure will be described below.**

FIG. 4 is a schematic diagram of the chassis cart locking apparatus locking the chassis cart according to a preferred embodiment of the present disclosure. When the actuator of the switching device is closed, the driving plate 4 moves with the actuator in the direction as shown, and triggers the U-shaped groove 502, so that the latching plate 502 rotates clockwise in the direction shown. Due a gap S between the protruding piece 3012 and the latching plate 502, the latching plate 502 may rotate to a position under the protruding piece 3012, and the rotation angle is controlled by the first limiting plate 5011. Under the action of the tension by the tension spring 503, the latching plate 502 is stably retained at this position. When the action is completed, there is not any contact between the driving plate 4 and the closing and locking unit 5.

At this time, if the chassis cart is driven, the screw 302 rotates, and the flipper plate 301 tends to rotate counterclockwise in the direction shown by the arrow in the figure. However, since the protruding piece 3012 is stopped by the latching plate 502, the flipper plate 301 cannot rotate counterclockwise, and as shown in FIG. 2, the stop pin 303 on the screw 302 is caught in the yielding hole 3011, so that the chassis cart cannot be driven. At the same time, because the driving plate 4 does not contact the latching plate 502, the force for driving the chassis cart will not be transferred to the actuator coupled to the driving plate 4.

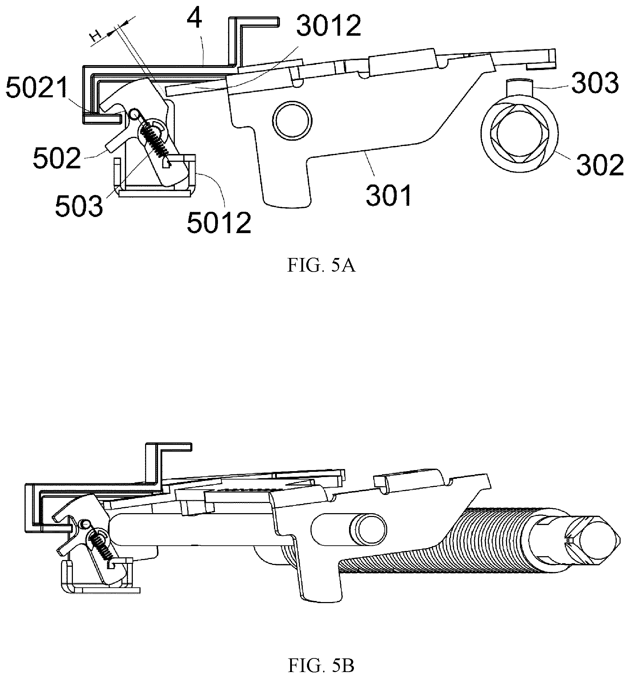

FIGS. 5A-5B illustrate a preferred embodiment of the present disclosure, in which FIG. 5A is a front view and FIG. 5B is a perspective view. The figures show schematic diagrams when the chassis cart locking apparatus releases the chassis cart. When the actuator of the switching device is in the opened state, the driving plate 4 moves downward by a certain distance along with the actuator in the direction shown, and triggers the U-shaped groove 5021 so that the latching plate 502 rotates counterclockwise in the direction shown and is limited by the second limiting plate 5012. Its stable state is maintained by the tension spring 503. At this point, the screw 302 is rotated and the flipper plate 301 may rotate counterclockwise to a certain angle still with a certain gap H between the protruding piece 3012 and the latching plate 502, and at the same time, the stop pin 303 will not be limited by the flipper plate 301. As such, the chassis cart may be driven.

According to the present disclosure, the chassis cart locking apparatus with a dead point mechanism is safer than the existing design, and the force for driving the chassis cart in or out will not be applied to the actuator of the switching device. Furthermore, the chassis cart locking apparatus is simply structured and modularized, and thus can save the assembling time. The chassis cart locking apparatus also satisfies demands of the IEC-related standard.

Although the preferred embodiments and figures of the present disclosure have been disclosed for illustrative purposes, those skilled in the art can make various substitutions, changes and modifications without departing from the scope of the present disclosure and the appended claims. Therefore, the present disclosure should not be limited to the content disclosed in the above-mentioned preferred embodiments and figures illustrated as examples. The protection scope of the present disclosure is limited by the appended claims.

## Claims

1. A locking apparatus for a chassis cart and a switching device, the switching device having an actuator coupled to a driving plate (4), wherein the locking apparatus comprises:
a locking unit (5) comprising a support plate (501), a latching plate (502) and an extension spring (503);
wherein the extension spring (503) has one end secured on the latching plate (502) and the other end secured on the support plate (501);
wherein the support plate (501) comprises a first limiting plate (5011) and a second limiting plate (5012);
wherein the latching plate (502) is rotatably secured onto a rotation shaft (5015) and, under the action of the driving plate (4), is configured to rotate clockwise or anticlockwise about the rotation shaft (5015);
wherein when the latching plate (502) rotates to be limited by the first limiting plate (5011), the driving plate (4) is configured to be separated from the locking unit (5), and when the latching plate (502) rotates to be limited by the second limiting plate (5012), the driving plate (4) is configured to come in contact with the locking unit (5), and
wherein the resetting of the driving plate (4) is configured to drive, under the action of the tension by the spring (503) the latching plate (502) to rotate about the rotation shaft (5015) away from the second limiting plate (5012) toward the first limiting plate (5011);
a flipper plate and screw mechanism (3) comprising a flipper plate (301) with a protruding piece (3012), and a screw (302) with a stop pin (303); the flipper plate (301) comprising a yielding hole (3011) which is configured to mate with the stop pin (303) to lock or yield, wherein if the chassis cart is driven, the screw (302) rotates, and the flipper plate (301) tends to rotate counterclockwise;
wherein a height and width of the latching plate (502) are adapted in a way that when the latching plate (502) is rotated to be limited by the first limiting plate (5011), the latching plate (502) is located under the protruding piece (3012) and blocks downward movement of the protruding piece (3012); and when the latching plate (502) is rotated to be limited by the second limiting plate (5012), the latching plate (502) gets out of a limiting range of the vertical movement of the protruding piece (3012).

2. The locking apparatus according to claim 1, wherein the latching plate (502) has a dead point position between the first limiting plate (5011) and the second limiting plate (5012), and the tension spring (503) achieves a maximum tensile energy storage when it is at the dead point position.

3. The locking apparatus according to claim 1, wherein the latching plate (502) comprises a U-shaped groove (5021) which is adapted to receive a driving plate protrusion (401) and is driven by the driving plate (4), and the latching plate rotates clockwise or counterclockwise about the rotation shaft (5015) between the first limiting plate (5011) and second limiting plate (5012).

4. The locking apparatus according to claim 3, wherein the U-shaped groove (5021) comprises a first protrusion (50211) and a second protrusion (50212); the first protrusion (50211) is adapted in a way that the latching plate (502), when limited by the first limiting plate (5011), is driven by the driving plate (4) about the rotation shaft (5015) until the latching plate (502) reaches a limiting position of the second limiting plate (5012); the second protrusion (50212) is adapted in a way that the latching plate (502), when limited by the second limiting plate (5012), is driven by the driving plate (4) about the rotation shaft (5015) until the latching plate (502) reaches a limiting position of the first limiting plate (5011).

5. The locking apparatus according to claim 3, wherein the driving plate (4) comprises a driving plate protrusion (401) which is adapted to mate with the U-shaped groove (5021) of the latching plate (502); when the latching plate (502) reaches a limiting position of the first limiting plate (5011) or a limiting position of the second limiting plate (5012), the driving plate protrusion (401) is released from the U-shaped groove (5021) if the driving plate (4) continues to move in the same direction, and drives the latching plate (502) if the driving plate (4) moves reversely.

6. The locking apparatus according to claim 2, wherein the latching plate (502) comprises a raised pin (5022), and the support plate (501) comprises a spring hook (5013); one end of the tension spring (503) is fixed on the raised pin (5022), and the other end thereof is fixed on the spring hook (5013).

7. The locking apparatus according to claim 6, wherein when the latching plate (502) rotates to a position that the raised pin (5022), the spring hook (5013) and the rotation shaft (5015) form a straight line, the latching plate (502) reaches the dead point position.

8. The locking apparatus according to claim 1, wherein the protruding piece (3012) and the flipper plate (301) are an integrated structure or a separable structure connected fixedly.

9. A switching device with a chassis cart, comprising:
A locking apparatus according to any of the preceding claims; the chassis cart further comprising an actuator coupled to a driving plate (4),.

10. The switching device according to claim 9, wherein the driving plate (4) coupled to the actuator of the switching device is configured to move up and down with a closing or opening operation of the actuator of the switching device.

## Patentansprüche

1. Verriegelungsvorrichtung für einen Fahrgestellwagen und eine Schaltvorrichtung, wobei die Schaltvorrichtung einen Aktuator aufweist, der mit einer Antriebsplatte (4) gekoppelt ist, wobei die Verriegelungsvorrichtung Folgendes umfasst:
eine Verriegelungseinheit (5), die eine Trägerplatte (501), eine Verriegelungsplatte (502) und eine Verlängerungsfeder (503) umfasst;
wobei die Verlängerungsfeder (503) ein Ende, das an der Verriegelungsplatte (502) befestigt ist, und das andere Ende, das an der Trägerplatte (501) befestigt ist, aufweist;
wobei die Trägerplatte (501) eine erste Begrenzungsplatte (5011) und eine zweite Begrenzungsplatte (5012) umfasst;
wobei die Verriegelungsplatte (502) drehbar auf einer Drehwelle (5015) befestigt ist und unter der Wirkung der Antriebsplatte (4) dazu ausgelegt ist, sich im Uhrzeigersinn oder gegen den Uhrzeigersinn um die Drehwelle (5015) zu drehen;
wobei, wenn sich die Verriegelungsplatte (502) dreht, um durch die erste Begrenzungsplatte (5011) begrenzt zu werden, die Antriebsplatte (4) dazu ausgelegt ist, von der Verriegelungseinheit (5) getrennt zu werden, und
wobei, wenn sich die Verriegelungsplatte (502) dreht, um durch die zweite Begrenzungsplatte (5012) begrenzt zu werden, die Antriebsplatte (4) dazu ausgelegt ist, mit der Verriegelungseinheit (5) in Kontakt zu kommen, und
wobei das Zurücksetzen der Antriebsplatte (4) dazu ausgelegt ist, unter der Wirkung der Spannung durch die Feder (503) die Verriegelungsplatte (502) anzutreiben, um sich um die Drehwelle (5015) weg von der zweiten Begrenzungsplatte (5012) zu der ersten Begrenzungsplatte (5011) zu drehen;
einen Klappplatten- und Schraubenmechanismus (3), umfassend eine Klappplatte (301) mit einem vorstehenden Stück (3012) und eine Schraube (302) mit einem Anschlagstift (303); wobei die Klappplatte (301) ein nachgiebiges Loch (3011) umfasst, das dazu ausgelegt ist, mit dem Anschlagstift (303) zusammenzupassen, um zu verriegeln oder nachzugeben, wobei, wenn der Fahrgestellwagen angetrieben wird, sich die Schraube (302) dreht und die Klappplatte (301) dazu neigt, sich gegen den Uhrzeigersinn zu drehen;
wobei eine Höhe und Breite der Verriegelungsplatte (502) auf eine Weise angepasst sind, dass, wenn die Verriegelungsplatte (502) gedreht wird, um durch die erste Begrenzungsplatte (5011) begrenzt zu werden, sich die Verriegelungsplatte (502) unter dem vorstehenden Stück (3012) befindet und eine Abwärtsbewegung des vorstehenden Stücks (3012) blockiert; und wobei, wenn die Verriegelungsplatte (502) gedreht wird, um durch die zweite Begrenzungsplatte (5012) begrenzt zu werden, die Verriegelungsplatte (502) aus einem Grenzbereich der Vertikalbewegung des vorstehenden Stücks (3012) herauskommt.

2. Verriegelungsvorrichtung nach Anspruch 1, wobei die Verriegelungsplatte (502) eine Totpunktposition zwischen der ersten Begrenzungsplatte (5011) und der zweiten Begrenzungsplatte (5012) aufweist und die Zugfeder (503) eine maximale Zugenergiespeicherung erreicht, wenn sie sich in der Totpunktposition befindet.

3. Verriegelungsvorrichtung nach Anspruch 1, wobei die Verriegelungsplatte (502) eine U-förmige Nut (5021) umfasst, die dazu ausgelegt ist, einen Antriebsplattenvorsprung (401) aufzunehmen, und durch die Antriebsplatte (4) angetrieben wird, und wobei sich die Verriegelungsplatte im Uhrzeigersinn oder entgegen dem Uhrzeigersinn um die Drehwelle (5015) zwischen der ersten Begrenzungsplatte (5011) und der zweiten Begrenzungsplatte (5012) dreht.

4. Verriegelungsvorrichtung nach Anspruch 3, wobei die U-förmige Nut (5021) einen ersten Vorsprung (50211) und einen zweiten Vorsprung (50212) umfasst; wobei der erste Vorsprung (50211) so angepasst ist, dass die Verriegelungsplatte (502), wenn durch die erste Begrenzungsplatte (5011) begrenzt, durch die Antriebsplatte (4) um die Drehwelle (5015) angetrieben wird, bis die Verriegelungsplatte (502) eine Begrenzungsposition der zweiten Begrenzungsplatte (5012) erreicht; wobei der zweite Vorsprung (50212) so angepasst ist, dass die Verriegelungsplatte (502), wenn sie durch die zweite Begrenzungsplatte (5012) begrenzt ist, von der Antriebsplatte (4) um die Drehachse (5015) angetrieben wird, bis die Verriegelungsplatte (502) eine Begrenzungsposition der ersten Begrenzungsplatte (5011) erreicht.

5. Verriegelungsvorrichtung nach Anspruch 3, wobei die Antriebsplatte (4) einen Antriebsplattenvorsprung (401) umfasst, der dazu ausgelegt ist, mit der U-förmigen Nut (5021) der Verriegelungsplatte (502) zusammenzupassen; wobei, wenn die Verriegelungsplatte (502) eine Begrenzungsposition der ersten Begrenzungsplatte (5011) oder eine Begrenzungsposition der zweiten Begrenzungsplatte (5012) erreicht, der Antriebsplattenvorsprung (401) aus der U-förmigen Nut (5021) gelöst wird, wenn sich die Antriebsplatte (4) in der gleichen Richtung weiterbewegt, und die Verriegelungsplatte (502) antreibt, wenn sich die Antriebsplatte (4) umgekehrt bewegt.

6. Verriegelungsvorrichtung nach Anspruch 2, wobei die Verriegelungsplatte (502) einen erhöhten Stift (5022) umfasst und die Stützplatte (501) einen Federhaken (5013) umfasst; wobei ein Ende der Zugfeder (503) an dem erhöhten Stift (5022) befestigt ist und das andere Ende davon an dem Federhaken (5013) befestigt ist.

7. Verriegelungsvorrichtung nach Anspruch 6, wobei, wenn sich die Verriegelungsplatte (502) in eine Position dreht, in der der angehobene Stift (5022), der Federhaken (5013) und die Drehwelle (5015) eine gerade Linie bilden, die Verriegelungsplatte (502) die Totpunktposition erreicht.

8. Verriegelungsvorrichtung nach Anspruch 1, wobei das vorstehende Stück (3012) und die Klappplatte (301) eine integrierte Struktur oder eine trennbare Struktur sind, die fest verbunden ist.

9. Schaltvorrichtung mit einem Fahrgestellwagen, die Folgendes umfasst:
eine Verriegelungsvorrichtung nach einem der vorhergehenden Ansprüche,
wobei der Fahrgestellwagen ferner einen Aktuator umfasst, der mit einer Antriebsplatte (4) gekoppelt ist.

10. Schaltvorrichtung nach Anspruch 9, wobei die Antriebsplatte (4), die mit dem Aktuator der Schaltvorrichtung gekoppelt ist, dazu ausgelegt ist, sich mit einem Schließ- oder Öffnungsvorgang des Aktuators der Schaltvorrichtung auf und ab zu bewegen.

## Revendications

1. Appareil de verrouillage pour un chariot de châssis et un dispositif de commutation, le dispositif de commutation ayant un actionneur accouplé à une plaque d'entraînement (4), l'appareil de verrouillage comprenant :
une unité de verrouillage (5) comprenant une plaque de support (501), une plaque d'accrochage (502) et un ressort de traction (503) ;
le ressort de traction (503) ayant une extrémité fixée sur la plaque d'accrochage (502) et l'autre extrémité fixée sur la plaque de support (501) ;
la plaque de support (501) comprenant une première plaque de limitation (5011) et une seconde plaque de limitation (5012) ;
la plaque d'accrochage (502) étant montée à rotation sur un arbre de rotation (5015) et étant conçue, sous l'action de la plaque d'entraînement (4), pour tourner dans le sens horaire ou antihoraire autour de l'arbre de rotation (5015) ;
la plaque d'entraînement (4) étant conçue, lorsque la plaque d'accrochage (502) tourne de façon à être limitée par la première plaque de limitation (5011), pour être séparée de l'unité de verrouillage (5), et la plaque d'entraînement (4) étant conçue, lorsque la plaque d'accrochage (502) tourne de façon à être limitée par la seconde plaque de limitation (5012), pour venir en contact avec l'unité de verrouillage (5), et
la remise en position initiale de la plaque d'entraînement (4) étant conçue pour imprimer à la plaque d'accrochage (502), sous l'action de la traction par le ressort (503), une rotation autour de l'arbre de rotation (5015) à l'écart de la seconde plaque de limitation (5012) vers la première plaque de limitation (5011) ;
un mécanisme à vis et à plaque basculante (3) comprenant une plaque basculante (301) avec une pièce saillante (3012), et une vis (302) avec une goupille d'arrêt (303); la plaque basculante (301) comprenant un trou de libération (3011) qui est conçu pour s'accoupler avec la goupille d'arrêt (303) à des fins de blocage ou de libération, la vis (302) tournant et la plaque basculante (301) tendant à tourner dans le sens antihoraire si le chariot de châssis est entraîné ;
une hauteur et une largeur de la plaque d'accrochage (502) étant adaptées de telle sorte que, lorsque la plaque d'accrochage (502) tourne de façon à être limitée par la première plaque de limitation (5011), la plaque d'accrochage (502) est située sous la pièce saillante (3012) et bloque un mouvement vers le bas de la pièce saillante (3012) ; et lorsque la plaque d'accrochage (502) tourne de façon à être limitée par la seconde plaque de limitation (5012), la plaque d'accrochage (502) sort d'une plage limite du mouvement vertical de la pièce saillante (3012).

2. Appareil de verrouillage selon la revendication 1, dans lequel la plaque d'accrochage (502) a une position de point mort entre la première plaque de limitation (5011) et la seconde plaque de limitation (5012), et le ressort de traction (503) atteint un emmagasinage d'énergie de traction maximum lorsqu'il est à la position de point mort.

3. Appareil de verrouillage selon la revendication 1, dans lequel la plaque d'accrochage (502) comprend une rainure en forme de U (5021) qui est adaptée pour recevoir une saillie de plaque d'entraînement (401) et est entraînée par la plaque d'entraînement (4), et la plaque d'accrochage tourne dans le sens horaire ou anti-horaire autour de l'arbre de rotation (5015) entre la première plaque de limitation (5011) et la seconde plaque de limitation (5012).

4. Appareil de verrouillage selon la revendication 3, dans lequel la rainure en forme de U (5021) comprend une première saillie (50211) et une seconde saillie (50212); la première saillie (50211) est adaptée de telle sorte que la plaque d'accrochage (502), lorsqu'elle est limitée par la première plaque de limitation (5011), est entraînée par la plaque d'entraînement (4) autour de l'arbre de rotation (5015) jusqu'à ce que la plaque d'accrochage (502) atteigne une position de limitation de la seconde plaque de limitation (5012) ; la seconde saillie (50212) est adaptée de telle sorte que la plaque d'accrochage (502), lorsqu'elle est limitée par la seconde plaque de limitation (5012), est entraînée par la plaque d'entraînement (4) autour de l'arbre de rotation (5015) jusqu'à ce que la plaque d'accrochage (502) atteigne une position de limitation de la première plaque de limitation (5011).

5. Appareil de verrouillage selon la revendication 3, dans lequel la plaque d'entraînement (4) comprend une saillie de plaque d'entraînement (401) qui est adaptée pour s'accoupler avec la rainure en forme de U (5021) de la plaque d'accrochage (502) ; lorsque la plaque d'accrochage (502) atteint une position de limitation de la première plaque de limitation (5011) ou une position de limitation de la seconde plaque de limitation (5012), la saillie de plaque d'entraînement (401) est libérée de la rainure en U (5021) si la plaque d'entraînement (4) continue à se déplacer dans la même direction, et entraîne la plaque d'accrochage (502) si la plaque d'entraînement (4) se déplace en sens inverse.

6. Appareil de verrouillage selon la revendication 2, dans lequel la plaque d'accrochage (502) comprend une protubérance (5022), et la plaque de support (501) comprend un crochet à ressort (5013) ; une extrémité du ressort de traction (503) est fixée sur la protubérance (5022), et l'autre extrémité de celui-ci est fixée sur le crochet à ressort (5013).

7. Appareil de verrouillage selon la revendication 6, dans lequel, lorsque la plaque d'accrochage (502) tourne jusqu'à une position telle que la protubérance (5022), le crochet à ressort (5013) et l'arbre de rotation (5015) forment une ligne droite, la plaque d'accrochage (502) atteint la position de point mort.

8. Appareil de verrouillage selon la revendication 1, dans lequel la pièce saillante (3012) et la plaque basculante (301) sont une structure d'un seul tenant ou une structure séparable raccordée de manière fixe.

9. Dispositif de commutation comportant un chariot de châssis, comprenant :
un appareil de verrouillage selon l'une quelconque des revendications précédentes ;
le chariot de châssis comprenant en outre un actionneur accouplé à une plaque d'entraînement (4).

10. Dispositif de commutation selon la revendication 9, dans lequel la plaque d'entraînement (4) accouplée à l'actionneur du dispositif de commutation est conçue pour se déplacer vers le haut et vers le bas avec une opération de fermeture ou d'ouverture de l'actionneur du dispositif de commutation.
